# EUROPÄISCHE PATENTSCHRIFT

(11) **EP 0 669 603 B1**
(45) Veröffentlichungstag und Bekanntmachung des Hinweises auf die Patenterteilung: **30.09.1998**
(21) Anmeldenummer: 94102834.2
(22) Anmeldetag: 24.02.1994
(51) Int. Cl.: G07F 7/06, B65G 1/137

(54) **Getränketerminal zur automatischen Ausgabe von Getränkekästen**
Terminal for drinks for automatic dispensing of drink crates
Terminal pour boissons pour la distribution automatique des casiers à bouteilles

(43) Veröffentlichungstag der Anmeldung: 30.08.1995
(73) Patentinhaber: SIEMENS AKTIENGESELLSCHAFT, 80333 München (DE)
(72) Erfinder: Avdic, Jürgen, D-90455 Nürnberg (DE)

(56) Entgegenhaltungen:
- EP-A- 0 172 539
- EP-A- 0 359 661
- EP-A- 0 396 960
- EP-A- 0 590 646
- FR-A- 2 117 113
- GB-A- 2 254 604
- US-A- 2 992 717

## Beschreibung

Die vorliegende Erfindung betrifft ein Getränketerminal zur automatischen Ausgabe von Getränkekästen.

Verkaufsstätten für Getränkekästen werden zumeist als Selbstbedienungsmärkte betrieben. Bei diesen Selbstbedienungsmärkten holt der Kunde mit einem Handwagen innerhalb des Marktes die von ihm gewünschten Getränkekästen selbst ab und transportiert sie zu einer Kasse. Analog erfolgt die Rückgabe des Leergutes, welches zumeist vorab an einer Kasse separat abgegeben wird. Nachteilig hierbei ist, daß der gesamte Kaufvorgang für den Kunden aufwendig und beschwerlich ist. Ferner hat ein derartiger Getränkemarkt einen großen Flächenbedarf, da auch ausreichende Verkehrswege für die Kunden vorhanden sein müssen. Weiterhin ist ein hoher Personalaufwand erforderlich, um die Getränkekästen nachzufüllen, um den Zahlvorgang durchzuführen und um die Kunden zu betreuen usw.

Außerdem unterliegen Selbstbedienungsmärkte den Ladenschlußzeiten, so daß der Kunde nur während einiger Stunden des Tages seine Einkäufe tätigen kann.

Aus der DE-PS 33 01 905 ist ein selbstkassierender Warenautomat zur automatischen Ausgabe von Getränkekästen mit zumindest einem Verkaufslager zur Bevorratung der einzelnen Getränkekästen, zumindest einer mit einer Kundenkonsole versehenene Getränkeausgabestelle, zumindest einem Kastentransportmittel zur Entnahme der Kästen aus dem Verkaufslager und zur Übergabe der Kästen an die Getränkeausgabestelle bekannt, wobei das Verkaufslager für jede Getränkesorte mindestens ein angetriebenes Fördergerät aufweist.

In der älteren Anmeldung EP-A-0 590 646, die hier gemäß Art. 54(3) EPÜ relevant ist, ist ein Getränketerminal zur automatischen Ausgabe von Getränkekästen bekannt, wobei das Getränketerminal zumindest ein Lieferterminal für die Anlieferung von mit Getränkekästen beladenen Paletten, ein Lagerfahrzeug für die Bevorratung von Paletten in einem Palettenlager, ein Verkaufslager zur Bevorratung der einzelnen Getränkekästen, eine Getränkeausgabestelle, welche mit einer Kundenkonsole versehen ist, und ein Kastentransportmittel zur Entnahme der Kästen aus dem Verkaufslager zur Übernahme der Kästen an die Getränkeausgabestelle, wobei das Getränketerminal darüber hinaus zumindest eine Vereinzelungseinrichtung zum Vereinzeln der Getränkekästen aufweist, und wobei das Verkaufslager mindestens ein Karussellager aufweist.

Aus dieser älteren Anmeldung ist ferner ein als Hochregallager ausgebildetes Palettenlager und ein als Hochregal-Fahrzeug ausgebildetes Lagerfahrzeug bekannt.

Der Erfindung liegt die Aufgabe zugrunde, ein Getränketerminal zur automatischen Ausgabe von Getränkekästen zu schaffen, welches bei vollautomatischer Betriebsweise ohne jegliches Personal Kunden bei betriebssicherer und schneller Arbeitsweise mit einer Vielzahl von Getränkesorten versorgen kann.

Die Aufgabe wird durch ein Getränketerminal gemäß Anspruch 1 gelöst.

Ein Getränketerminal, das
- ein Lieferterminal für die Anlieferung von mit Getränkekästen beladenen Paletten,
- zumindest ein Lagerfahrzeug, z. B. ein Hochregal-Fahrzeug, für die Bevorratung der Paletten in einem Palettenlager, z. B. einem Hochregal,
- eine Vereinzelungseinrichtung zum Vereinzeln der Getränkekästen,
- zumindest ein Verkaufslager zur Bevorratung der einzelnen Getränkekästen und
- zumindest ein Kastentransportmittel, z.B. ein Kastenfahrzeug, zur Entnahme der Kästen aus dem Verkaufs lager und zur Übergabe der Kästen an eine Getränkeausgabestelle, welche mit einer Kundenkonsole versehen ist,
aufweist, ist bereits in der älteren, nicht vorveröffentlichten deutschen Patentanmeldung P 42 32 833.0 (Offenlegungstag: 31.03.1994) beschrieben. Das Verkaufslager dieser Anmeldung ist mit geneigten Rollenbahnen versehen, auf denen die Getränkekästen selbsttätig an das kundenseitige Ende des Verkaufslagers rollen sollen. Diese Ausführungsform ist jedoch nicht funktionsfähig, da es - z. B. bei beschädigten Getränkekästen - in der Praxis immer wieder zu Verkantungen kommt, so daß das Verkaufslager sich selbst blockiert. Die Behebung einer derartigen Blockade ist nur mit erheblichem Personalaufwand möglich, da der verklemmte Getränkekasten durch den Druck der nachfolgenden Getränkekästen festgekeilt ist. Darüber hinaus ist, wenn die Rollenbahn von anderen Rollenbahnen umgeben ist, der verkeilte Kasten nicht ohne weiteres zugänglich.

Bei angetriebenen Fördergeräten tritt das für die obenstehend erwähnten geneigten Rollenbahnen beschriebene Problem der Verkantung und Verkeilung von Getränkekästen nicht auf.

Wenn das Fördergerät als Staurollenförderer ausgebildet ist, ist es jederzeit möglich, das Förderzeug mit vollen Getränkekästen zu beschicken und so den durch die Entnahme von Getränkekästen entstandenen Fehlbestand wieder aufzufüllen. Alternativ dazu ist es möglich, das angetriebene Fördergerät derart auszubilden, daß es das Fördergut vorwärts- und rückwärts verfahren kann. In diesem Fall ist es nämlich möglich, das Fördergut soweit zurückzufahren, daß das Fördergerät an einer Beschickungsstelle lückenfrei aufgefüllt werden kann. Es ist also ein Auftakten des Fördergerätes möglich.

Wenn für eine Getränkesorte mindestens zwei Fördergeräte vorhanden sind, ist die Bedienung von kundenseitigen Anforderungen auch während des Auftaktens möglich. Wenn die Fördergeräte parallel angeordnet sind, können aus dem einen Fördergerät Getränkekästen entnommen werden, während das andere Fördergerät aufgetaktet wird. Wenn die Fördergeräte hintereinander angeordnet sind, kann durch die Entnahme von Getränkekästen während des Auftaktens zwar eine Lücke entstehen, diese Lücke wird im Regelfall jedoch sehr klein sein, also z.B. nur zwei oder drei Getränkekästen umfassen.

Das erfindungsgemäße Getränketerminal weist eine Vielzahl von Vorteilen auf. Der wesentliche Vorteil liegt darin, daß das Getränketerminal gänzlich ohne jedes Personal arbeitet, so daß die Betriebskosten erheblich reduziert sind. Weiterhin ist nur ein relativ geringer Platzbedarf erforderlich, da keine den Kunden zugänglichen Verkehrswege erforderlich sind. Die vollautomatische Steuerung bewirkt sehr kurze Zugriffszeiten, so daß der Kunde die georderten Getränkekästen wesentlich schneller in Empfang nehmen kann. Der gesamte Ablauf des Getränketerminals erfolgt vollautomatisch. Daher ist auch die gesamte Abwicklung, Nachfüllung und Lagerhaltung optimierbar.

Die Kundenkonsole ist bevorzugterweise zur bargeldlosen Zahlungsabwicklung mit einem Kartenleser versehen, so daß der Kunde eine EC-Karte zur Bezahlung verwenden kann. Durch die einzutippende Geheimzahl ist dabei ein hohes Maß an Betriebssicherheit gewährleistet. Da EC-Karten nicht an Jugendliche ausgegeben werden, ist auch sichergestellt, daß Jugendliche oder Kinder keine alkoholische Getränke kaufen können. Die Kundenkonsole kann ferner auch derart ausgebildet sein, daß sie auch Kreditkarten oder betreiberspezifische Kundenkarten annimmt.

Um auch die Rückgabe von Leergut zu ermöglichen, ist der Kundenkonsole eine Leergutannahmestelle zugeordnet. Diese steht mit einem Leergutspeicher in Verbindung, welchem ein Palettierer nachgeordnet ist, um die Leergutkästen auf Paletten zu stapeln und diese automatisch zu transportieren.

Um den gesamten Anliefervorgang zu automatisieren, ist im Bereich des Lieferterminals eine Leseeinrichtung zur Bestimmung der angelieferten palettierten Getränkekästen angeordnet. Es ist somit möglich, das Getränketerminal per LKW mit Vollpaletten zu versorgen, welche jeweils sortenrein mit gleichen Getränkekästen beladen sind. Der LKW-Fahrer entlädt, beispielsweise mittels eines Gabelstaplers, eine Vollpalette und fährt sie zum Lieferterminal. Dort wird mittels eines Barcode-Lesers die Getränkesorte bestimmt. Falls sich hierbei Probleme ergeben, kann der Fahrer auch mittels eines Handscanners per Hand eine Identifikation der Getränkesorte vornehmen. Notfalls ist die Getränkesorte auch über eine Tastatur eingebbar. Von dem Anlieferterminal aus wird die beladene Palette in dem Palettenlager abgestellt. In ähnlicher Weise kann aus dem Palettenlager eine leere Palette oder eine mit Leergutkästen beladene Palette entnommen und an das Lieferterminal übergeben werden, damit der Fahrer das Leergut bzw. die leere Palette abtransportieren kann.

Das Lieferterminal kann, gesteuert durch eine zentrale Recheneinheit, auch so bedient werden, daß - ohne Rückgabe von Leergutpaletten oder leeren Paletten - lediglich eine Befüllung mit vollen oder leeren Paletten möglich ist, beispielsweise zum erstmaligen Beschicken des Getränketerminals. Es können auch einzelne, auswählbare Paletten ausgeschleust werden, beispielsweise Leergutpaletten, Vollgutpaletten oder leere Paletten, beispielsweise um das Getränketerminal leerzufahren oder um bestimmte Getränkepaletten zu entnehmen.

Um den Anliefervorgang bzw. den Vorgang des Abtransportes von Leergutpaletten überwachen zu können, ist im Bereich des Lieferterminals ein Lieferscheindrucker angeordnet, welcher dem Fahrer automatisch einen Lieferschein ausstellt.

Die zwischen dem Palettenlager und dem Verkaufslager angeordnete Vereinzelungseinrichtung umfaßt vorzugsweise einen Depalettierer sowie zumindest ein Kastentransportmittel, welches einzelne Getränkekästen vom Depalettierer entnimmt und in das Verkaufslager überführt.

Weitere Vorteile und Einzelheiten ergeben sich aus der nachfolgenden Beschreibung eines Ausführungsbeispiels und in Verbindung mit den Figuren. Dabei zeigen:
FIG 1 eine schematische Ansicht eines Getränketerminals;
FIG 2 eine vereinfachte Frontansicht des Verkaufslagers;
FIG 3 eine Seitenansicht des Verkaufslagers und
FIG 4 eine Kundenkonsole.

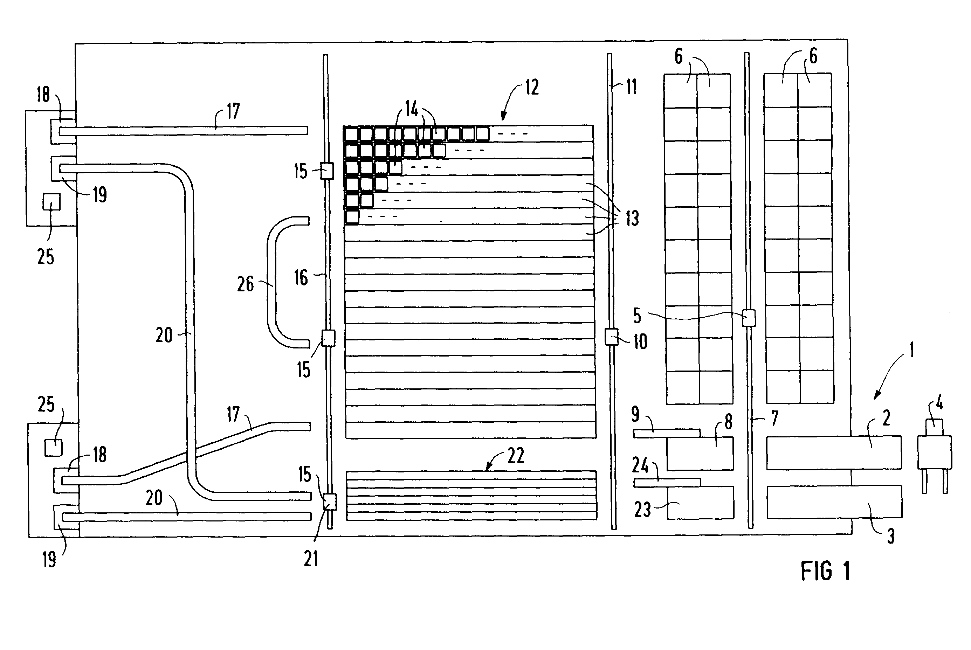

Gemäß FIG 1 weist das Getränketerminal ein Lieferterminal 1 auf. Dem Lieferterminal 1 sind zwei Rollenbahnen 2, 3 zugeordnet, wobei beide Rollenbahnen 2, 3 mittels des Gabelstaplers 4 bedienbar sind. Mittels der Rollenbahn 2 werden Paletten mit gefüllten Getränkekästen vom Gabelstapler 4 zur Übergabestelle an das Hochregalfahrzeug 5 befördert, mittels der Rollenbahn 3 Leerpaletten bzw. Paletten mit leeren Kästen von der Übergabestelle des Hochregalfahrzeugs 5 zum Gabelstapler 4. Die Rollenbahnen 2, 3 sind vorzugsweise angetrieben.

Das Hochregalfahrzeug 5 ist auf den Schienen 7 verfahrbar und so in der Lage, Paletten im Hochregallager 6 abzustellen bzw. aus dem Hochregallager 6 abzuholen. Es kann aber auch nichtschienengebunden sein.

Im vorliegenden Fall weist das Hochregalfahrzeug 5 eine Teleskopgabel auf, mit der es möglich ist, Palettenlager mit einer Lagertiefe von maximal zwei zu bedienen.

Das Hochregalfahrzeug 5 kann auch eine Vereinzelungseinrichtung 8 anfahren. In der Vereinzelungseinrichtung 8 (Depalettierer) werden die vollen Getränkekästen einer Palette einzeln auf dem Förderband 9 abgestellt und zu einem einzeln auf dem Förderband 9 abgestellt und zu einem Vereinzelungsfahrzeug 10 transportiert. Das Vereinzelungsfahrzeug 10 ist entlang der Schiene 11 verfahrbar. Es setzt die vollen Getränkekästen im Verkaufslager 12 ab. Das Vereinzelungsfahrzeug 10 kann vorzugsweise mehrere Getränkekästen gleichzeitig vom Förderband 9 aufnehmen und im Verkaufslager 12 abstellen.

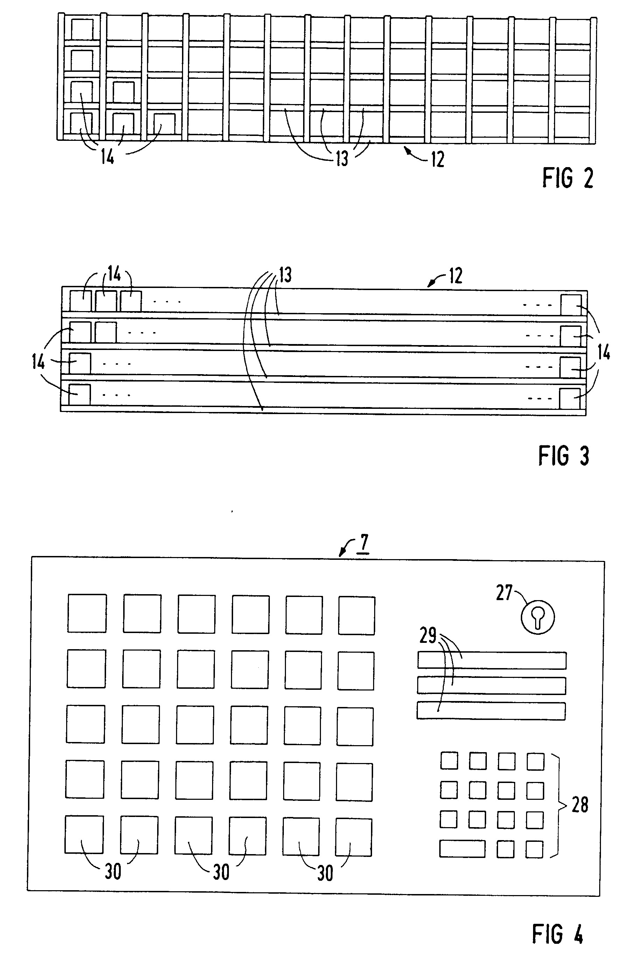

Das Verkaufslager 12 besteht, wie in den Figuren 2 und 3 näher dargestellt, aus einer Vielzahl von Rollenbahnen 13, mittels derer die Getränkekästen 14 transportiert und geführt werden. FIG 2 zeigt dabei das Verkaufslager 12 von vorne, also aus der kundenseitigen Richtung, FIG 3 von der Seite. Die Rollenbahnen 13 bestehen aus einer Vielzahl von angetriebenen Rollen. Der Antrieb bzw. die Antriebe der Rollen sind dabei der Übersichtlichkeit halber nicht dargestellt, ebenso die einzelnen Rollen.

Die Ausbildung der Rollenbahnen kann verschiedener Art sein. Gemäß einer Ausführungsform der vorliegenden Erfindung sind die Rollenbahnen 13 als Staurollenförderer ausgebildet, wie sie beispielsweise von der Firma Klinkhammer (TGW) in Nürnberg angeboten werden. Die Wirkungsweise eines Staurollenförderers ist dabei allgemein bekannt und wird daher im Rahmen der vorliegenden Erfindung nicht näher beschrieben.

Alternativ können die Rollenbahnen 13 auch als eine Vielzahl gemeinsam angetriebener Rollen (bzw. als Förderband) ausgebildet sein. In diesem Fall ist jede Rollenbahn mittels des Antriebs vorzugsweise sowohl vorwärts als auch rückwärts verfahrbar. Die Vorwärtsverfahrbarkeit ist selbstverständlich, da sie benötigt wird, um dem kundenseitigen Kastenfahrzeug 15 stets erneut einen vollen Kasten zur Verfügung stellen zu können. Die Rückwärtsverfahrbarkeit ist aus folgendem Grund vorteilhaft:

Der Vereinzelungseinrichtung 8 werden durch das Hochregalfahrzeug 5 im Regelfall ganze Paletten - manchmal auch halbe Paletten - zur Vereinzelung zugeführt. Es fällt daher beim Vereinzeln jeder Palette eine Vielzahl von Kästen der gleichen Getränkesorte an, die dem Verkaufslager 12 zuzuführen ist. Das Vereinzeln einer Palette kann daher erst dann erfolgen, wenn in der der Getränkesorte zugeordneten Rollenbahn 13 genügend Leerplätze zur Aufnahme der Kästen einer bzw. einer halben Palette vorhanden sind. Hierzu wird dann die betreffende Rollenbahn 13 soweit zurückgefahren, daß der erste neue zuzuführende Kasten unmittelbar an den letzten bereits der Rollenbahn 13 zugeführten Kasten angrenzt. Die Rollenbahn 13 kann also lückenfrei aufgefüllt werden.

Während die Rollenbahn 13 einer Getränkesorte zurückgefahren ist bzw. während die Rollenbahn 13 aufgetaktet (d.h. aufgefüllt) wird, können dieser Rollenbahn 13 im Regelfall keine Kästen entnommen werden. Das Problem läßt sich aber ganz einfach dadurch umgehen, daß zumindest für häufig benötigte Getränkesorten zwei parallele Rollenbahnen 13 vorgesehen sind. In diesem Fall kann die eine Rollenbahn 13 aufgetaktet werden, während die andere nach wie vor der Kundenbelieferung zur Verfügung steht.

Alternativ oder zusätzlich ist es auch möglich, die Rollenbahnen 13 in einen hochregallagerseitigen Teil 13' und in einen kundenseitigen Teil 13'' aufzuteilen. Wie aus den FIG 1 und 3 ersichtlich ist, ist der kundenseitige Teil bzw. das vordere Fördergerät 13'' dabei kürzer als der hochregalseitige Teil bzw. das hintere Fördergerät 13'. Wenn nun eine der Rollenbahnen 13 aufzutakten ist, so wird bei dieser Ausgestaltung nur das hintere Fördergerät 13' zurückgefahren, das vordere bleibt unverändert. Dadurch steht es weiterhin dem Kunden zur Belieferung zur Verfügung.

Falls während des Auftaktens keine Kundenanforderung bedient werden muß, ist die Rollenbahn 13 nach dem Auftakten lückenfrei aufgefüllt. Falls Kundenanforderungen bedient worden sind, ist zwar eine Lücke entstanden, die Lücke ist aller Wahrscheinlichkeit nach aber nur sehr klein. Darüber hinaus kann auch diese Lücke durch Zurückfahren des Fördergutes des vorderen Fördergeräts 13" nach dem Auftakten des hinteren Fördergeräts 13' geschlossen werden. Zwar steht dann während dieses Zeitraums die Rollenbahn 13 für kundenseitige Anforderungen nicht zur Verfügung, aufgrund der Kürze des vorderen Fördergeräts 13" ist dieser Zeitraum jedoch nur sehr kurz und daher tolerierbar.

Dem in den Figuren nicht dargestellten Rechner des Getränketerminals ist bekannt, welche Palette mit welcher Getränkesorte zu welchem Zeitpunkt im Hochregallager 6 abgestellt wurde. Vorzugsweise wird daher zum Nachfüllen des Verkaufslagers 12 nicht die Palette dem Hochregallager 6 entnommen, welche am günstigsten erreichbar ist, sondern es wird stets die Palette der Vereinzelungseinrichtung 8 zugeführt, die bereits am längsten im Hochregallager 6 lagert.

An dem stirnseitigen linken Ende des Verkaufs lagers 12 sind Schienen 16 vorhanden, auf welchen Kastenfahrzeuge 15 verfahrbar sind. Zur Beschleunigung des Verkaufsvorganges sind vorzugsweise mehrere derartige Kastenfahrzeuge 15 vorhanden. Mit Hilfe dieser Fahrzeuge 15 können einzelne Getränkekästen aus dem Verkaufs lager 12 entnommen werden, wobei die Kastenfahrzeuge 15 derart ausgebildet sind, daß sie gleichzeitig mehrere Getränkekästen tragen können. Diese können nachfolgend an eine Ausgabe-Rollenbahn 17 übergeben werden, welche mit einer Getränke-Ausgabestelle 18 verbunden ist.

Neben der Getränke-Ausgabestelle 18 ist eine Leergut-Annahmestelle 19 angeordnet, welcher eine Leergut-Rollenbahn 20 zugeordnet ist. Dadurch können Leergutkästen einem Verteiler 21 zugeleitet werden, welcher in Form eines Fahrzeuges oder dergleichen ausgebildet ist und die Leergut-Getränkekästen nach Kastenart sortiert an die zueinander parallelen Bahnen des Leergutspeichers 22 übergibt. Für jeden Kastentyp ist dabei mindestens eine Bahn des Leergutspeichers 22 reserviert. Um bei Hochbetrieb Stauungen zu vermeiden, ist der Leergutspeicher 22 derart dimensioniert, daß er mehr als eine Palette, z.B. zwischen 1,2 und 1,5 Paletten pro Kastentyp, fassen kann. Optimal ist eine Pufferlänge von 1,3 Paletten.

Die Rollenbahnen des Leergutspeichers 22 sind vorzugsweise analog den Rollenbahnen 13 des Verkaufslagers 12 angetrieben.

Wenn eine der Rollenbahnen des Leergutspeichers 22 voll genug ist, um eine Palette mit leeren Getränkekästen zu füllen, wird über das Hochregalfahrzeug 5 dem Hochregal 6 eine Leerpalette entnommen und der Palettiereinheit 23 zugeführt. Das Vereinzelungsfahrzeug 10 entnimmt daraufhin der entsprechenden Rollenbahn des Leergutspeichers 22 die leeren Getränkekästen und setzt sie auf dem Förderband 24 der Palettiereinheit 23 ab. Dort wird dann die Leerpalette mit Leergut gefüllt und sodann wieder im Hochregal 6 gelagert.

Vorteilhafterweise sind die Vereinzelungseinrichtung 8 und die Palettiereinheit 23 zu einer gemeinsamen Einheit zusammengefaßt, da in diesem Fall der konstruktive Aufwand erheblich verringert wird. Insbesondere kann in diesem Fall eine Palette mit vollen Getränkekästen geleert werden und sodann sofort mit Leergut wieder gefüllt werden.

Bei dem gezeigten Ausführungsbeispiel sind zwei Kundenkonsolen 25 vorgesehen, welchen jeweils eine Getränke-Ausgabestelle 18 und eine Leergut-Annahmestelle 19 zugeordnet sind. Das Verkaufslager 12 ist symmetrisch ausgebildet, um kurze Zugriffszeiten zu erreichen.

Um eine reibungslose Funktion des Getränketerminals zu gewährleisten, wenn eine bestimmte Getränkesorte in einer Hälfte des Verkaufslagers 12 nicht verfügbar ist, ist eine Bypass-Pufferbahn 26 vorgesehen. Mittels dieser Pufferbahn 26 können Getränkekästen 14 von den Kastenfahrzeugen 15 einer Verkaufsseite auf die andere Verkaufsseite übergeben werden.

FIG 4 zeigt eine Teilansicht der Kundenkonsole 25. Sie weist einen Schlüsselschalter 27 auf, um notfalls durch Bedienungspersonal manuelle Funktionen durchführen zu können. FIG 4 zeigt weder die Eingabe für eine EC-Karte noch die Ausgabe einer Geldwertkarte zur Abrechnung des zurückgegebenen Leergutes. An der Bedienerkonsole sind Funktionstasten 28 vorgesehen, um die EC-Geheimzahl einzugeben und um die Betriebsarten auszuwählen.

Über das Display 29 gibt der Kunde zunächst ein, ob er Leergut abgeben möchte. Sodann wird das Leergut in die Leergut-Annahmestelle 19 eingegeben und dort automatisch geprüft. Es wird ermittelt, ob die Leergutkästen annahmefähig sind, dabei wird auch der Füllzustand mit leeren Flaschen überprüft. Gegebenenfalls wird dem Kunden das nicht akzeptierte Leergut zurückgegeben.

Der Wert des Leergutes kann bei einem nachfolgenden Einkauf sofort verrechnet werden. Es ist aber auch möglich, dem Kunden eine Leergut-Wertkarte auszugeben, auf welcher der anzurechnende oder auszuzahlende Betrag gespeichert ist. Sofern der Kunde den Betriebsmodus "Getränkebestellung" wählt, kann er über Getränkeauswahltasten 30 die gewünschte Getränkesorte bestellen. Falls der Kunde eine Geldwertkarte besitzt, kann er diese zur Verrechnung eingeben.

Nachdem die gewünschten Getränkekästen 14 aus dem Verkaufslager 12 entnommen und der Getränke-Ausgabestelle 18 zugeführt wurden, wird der erforderliche Geldbetrag automatisch von der EC-Karte abgebucht, der Kunde erhält durch einen nicht dargestellten Drucker einen Beleg ausgedruckt. Der gesamte Funktionsablauf erfolgt automatisch. Es findet keinerlei Bargeldtransfer statt. Hierdurch erhöht sich die Betriebssicherheit. Die Gefahr von Überfällen oder Einbrüchen wird, da kein Bargeld vorhanden ist, verringert.

Mittels einer zentralen Rechnereinheit, vorzugsweise einem Industrie-PC, werden die einzelnen Funktionsabläufe des Getränketerminals überwacht. Dabei wird u. a. der Füllzustand des Hochregallagers 6 und des Verkaufslagers 12 ermittelt, um rechtzeitig Nachbestellungen vornehmen zu können. All dies erfolgt automatisch, ebenso wie die wegoptimierte Steuerung sämtlicher Fahrzeuge 5, 15, um eine möglichst kurze Zugriffszeit zu realisieren. Es versteht sich, daß Notfunktionen vorgesehen sind, um beispielsweise das Getränketerminal leerzufahren oder um gezielt einzelne Funktionsabläufe beeinflussen zu können.

Die zentrale Rechnereinheit weist eine Festplatte oder dergleichen als Massespeicher auf. Um das Getränketerminal auch bei einer Fehlfunktion dieses Massenspeichers sicher weiterbetreiben zu können, ist die Festplatte doppelt vorhanden. Die beiden Festplatten werden in Spiegelung zueinander betrieben.

Um die Betriebssicherheit des Getränketerminals noch weiter zu erhöhen, ist die zentrale Rechnereinheit mit einer sogenannten unterbrechungsfreien Stromversorgung (USV) versehen. Dadurch ist es möglich, auch bei einem Spannungseinbruch innerhalb des Getränketerminals die für eine ordnungsgemäße Fortsetzung des Betriebs nötigen Daten noch zu erfassen und in der zentralen Rechnereinheit abzuspeichern.

Um den Bedienungskomfort noch weiter zu erhöhen, ist die zentrale Rechnereinheit über ein Modem an das Telefonnetz angeschlossen. Dadurch ist es möglich, das Getränketerminal aus der Ferne zu warten und zu verwalten. Auch der Lagerbestand bzw. die verkauften Getränkekästen sind über das Modem abrufbar. Gegebenenfalls ist sogar eine Fehlerdiagnose und/oder eine Fehlerkorrektur möglich. Abschließend sei noch erwähnt, daß anstelle des Hochregallagers 6 selbstverständlich auch ein einfaches Palettenlager verwendet werden kann. In diesem Fall wird selbstverständlich auch kein Hochregalfahrzeug 5 benötigt, sondern nur ein normales Lagerfahrzeug.

## Patentansprüche

1. Getränketerminal zur automatischen Ausgabe von Getränkekästen, wobei das Getränketerminal zumindest
- ein Lieferterminal (1) für die Anlieferung von mit Getränkekästen beladenen Paletten,
- ein Palettenlager (6) und ein Lagerfahrzeug (5) für die Bevorratung von Paletten in dem Palettenlager (6),
- ein Verkaufslager (12) zur Bevorratung der einzelnen Getränkekästen,
- eine Getränkeausgabestelle (18), welche mit einer Kundenkonsole (25) versehen ist,
- ein Kastentransportmittel (15) zur Entnahme der Kästen aus dem Verkaufslager (12) und zur Übergabe der Kästen an die Getränkeausgabestelle (18) und
- zumindest eine Vereinzelungseinrichtung (8) zum Vereinzeln der Getränkekästen aufweist,
- wobei das Verkaufslager (12) für jede Getränkesorte mindestens ein angetriebenes Fördergerät (13) aufweist.

2. Getränketerminal nach Anspruch 1, **dadurch gekennzeichnet,** daß das Fördergerät (13) als Staurollenförderer ausgebildet ist.

3. Getränketerminal nach Anspruch 1, **dadurch gekennzeichnet,** daß das angetriebene Fördergerät (13) derart ausgebildet ist, daß es das Fördergut (26) vorwärts und rückwärts verfahren kann.

4. Getränketerminal nach Anspruch 3, **dadurch gekennzeichnet,** daß für mindestens eine Getränkesorte mindestens zwei Fördergeräte (13', 13") vorhanden sind.

5. Getränketerminal nach Anspruch 4, **dadurch gekennzeichnet,** daß die mindestens zwei Fördergeräte (13', 13") parallel angeordnet sind.

6. Getränketerminal nach Anspruch 5, **dadurch gekennzeichnet,** daß die mindestens zwei Fördergeräte (13', 13") hintereinander angeordnet sind

7. Getränketerminal nach Anspruch 6, **dadurch gekennzeichnet,** daß das vordere Fördergerät (13") kürzer als das hintere Fördergerät (13') ist.

8. Getränketerminal nach einem der obigen Ansprüche, **dadurch gekennzeichnet,** daß Palettenlager (6) als Hochregallager (6) ausgebildet ist und daß das Lagerfahrzeug (5) als Hochregal-Fahrzeug (5) ausgebildet ist.

## Claims

1. Drinks terminal for the automatic dispensing of drinks boxes, wherein the drinks terminal has at least
- one delivery terminal (1) for delivering pallets loaded with drinks boxes,
- one pallet warehouse (6) and one warehouse vehicle (5) for supplying pallets in the pallet warehouse (6),
- one sales store (12) for supplying the individual drinks boxes,
- one drinks dispensing point (18) which is provided with a customer console (25),
- one box transport means (15) for removing the boxes from the sales store (12) and transferring the boxes to the drinks dispensing point (18) and
- at least one segregating device (8) for segregating the drinks boxes,
- wherein the sales store (12) has at least one driven conveyor unit (13) for each drink type.

2. Drinks terminal according to Claim 1, characterized in that the conveyor unit (13) is in the form of an accumulating roller conveyor.

3. Drinks terminal according to Claim 1, characterized in that the driven conveyor unit (13) is designed in such a way that it may move the goods to be conveyed (26) forwards and backwards.

4. Drinks terminal according to Claim 3, characterized in that at least two conveyor units (13', 13") are present for at least one drink type.

5. Drinks terminal according to Claim 4, characterized in that the at least two conveyor units (13', 13") are arranged parallel.

6. Drinks terminal according to Claim 5, characterized in that the at least two conveyor units (13', 13") are arranged one behind the other.

7. Drinks terminal according to Claim 6, characterized in that the front conveyor unit (13") is shorter than the rear conveyor unit (13').

8. Drinks terminal according to one of the preceding Claims, characterized in that pallet warehouse (6) is in the form of high-bay warehouse (6) and in that the warehouse vehicle (5) is in the form of high-bay vehicle (5).

## Revendications

1. Terminal de boissons pour la distribution automatique de caisses de boissons, le terminal de boissons comportant au moins
- un terminal (1) de fourniture pour la fourniture de palettes chargées de caisses de boissons,
- un entrepôt (6) de palettes et un véhicule (5) d'entrepôt pour le stockage de palettes dans l'entrepôt (6) de palettes,
- un entrepôt (12) de vente pour le stockage des caisses de boissons,
- un guichet (18) de distribution de boissons qui est muni d'un pupitre (25) de commande pour les consommateurs,
- un moyen (15) de transport des caisses pour prélever les caisses de l'entrepôt (12) de vente et pour envoyer les caisses au guichet (18) de distribution de boissons, et
- au moins un dispositif (8) d'individualisation pour individualiser les caisses de boissons,
- l'entrepôt (12) de vente comportant pour chaque sorte de boisson au moins un appareil (13) convoyeur entraîné.

2. Terminal de boissons suivant la revendication 1, caractérisé en ce que l'appareil (13) convoyeur est réalisé en convoyeur à galets à accumulation.

3. Terminal de boissons suivant la revendication 1, caractérisé en ce que l'appareil (13) convoyeur entraîné est réalisé de telle manière que le produit (26) à convoyer peut être déplacé vers l'avant et vers l'arrière.

4. Terminal de boissons suivant la revendication 3, caractérisé en ce qu'il est présent au moins deux appareils (13', 13") convoyeurs pour au moins une sorte de boisson.

5. Terminal de boissons suivant la revendication 4, caractérisé en ce que les au moins deux appareils (13', 13") convoyeurs sont montés en parallèle.

6. Terminal de boissons suivant la revendication 5, caractérisé en ce que les au moins deux appareils (13', 13") convoyeurs sont montés en série.

7. Terminal de boissons suivant la revendication 6, caractérisé en ce que l'appareil (13") convoyeur avant est plus court que l'appareil (13') convoyeur arrière.

8. Terminal de boissons suivant l'une des revendications précédentes, caractérisé en ce qu'un entrepôt (6) de palettes est réalisé en entrepôt (6) à haut rayonnage et en ce que le véhicule (5) de l'entrepôt est réalisé en véhicule (5) transélévateur.
